# EUROPÄISCHE PATENTSCHRIFT

(11) **EP 2 524 634 B1**
(45) Veröffentlichungstag und Bekanntmachung des Hinweises auf die Patenterteilung: **21.05.2014**
(21) Anmeldenummer: 12168063.1
(22) Anmeldetag: 15.05.2012
(51) Int. Cl.: A47J 31/00, A47J 31/46, A47J 31/30

(54) **Getränkeautomat**
Beverage machine
Automate à boissons

(30) Priorität: 20.05.2011 DE 102011076216
(43) Veröffentlichungstag der Anmeldung: 21.11.2012
(73) Patentinhaber: WMF WÜRTTEMBERGISCHE METALLWARENFABRIK AG, 73309 Geislingen/Steige (DE)
(72) Erfinder: Göltenboth, Frank, 89134 Blaustein (DE); Kiefer, Alexander, 73329 Kuchen (DE); Schneider, Oliver, 73312 Geislingen/Steige (DE); Albert, Heinz, 89150 Laichingen (DE); Bais, Johannes, 89075 Ulm (DE)
(74) Vertreter: BRP Renaud & Partner

(56) Entgegenhaltungen:
- EP-A1- 1 759 617
- EP-A1- 1 764 014
- EP-A1- 1 795 095
- US-A1- 2008 063 772

## Beschreibung

Die vorliegende Erfindung betrifft einen Getränkeautomaten oder andere Zubereitungsmaschinen, insbesondere einen Kaffeeautomaten, mit einem von einem Leitungsanschluss oder einem Tank durch einen Boiler zu einer Ausgabestelle führenden Hauptstrompfad. Ein solcher Getränkeautomat ist aus dem Dokument EP 1 795 095 bekannt.

Kaffeeautomaten und insbesondere sogenannten Vollautomaten, erstrecken sich von günstigen Modellen im Haushalt bis hin zu professionellen Geräten in der Gastronomie. In den einzelnen Preisklassen sind die Kaffeeautomaten mit unterschiedlichen Wasserheizsystemen ausgestattet, um dem jeweils geltenden Marktpreis gerecht zu werden. Meist sind dabei in den Haushaltsgeräten günstige Durchlauferhitzer zu finden, die im Ruhezustand wenig oder gar keine Energie benötigen und das Wasser erst bei Bedarf erhitzen. Die Aufheizzeit und die Temperatursteuerung sind für diesen Kundenbereich, das heißt den Haushaltsbereich, dabei akzeptabel. Anders sieht dies in der Gastronomie aus, in welcher üblicherweise die Ansprüche an Qualität und Leistung höher ausfallen. Der Getränkebezug soll hierbei sofort stattfinden und dabei die Temperatur möglichst exakt gehalten werden. Aus diesem Grund befinden sich in diesem Bereich oft Boiler- und Kesselsysteme in den Kaffeeautomaten wieder. Im Markt des mittleren Preissegments, wie beispielsweise in Büroanwendungen und kleineren Betrieben mit Kundenempfang, ist die Produktpalette im Vergleich weniger vielfältig. Durchlauferhitzer benötigen hier zu viel Zeit für eine Dosierung, wogegen die kompletten (geschlossenen) Boilersysteme überdimensioniert sind.

Bei den sich am Markt befindlichen Boilersystemen wird zudem zwischen geschlossenen Boilersystemen und offenen Boilersystemen unterschieden, wobei geschlossene Boilersysteme vergleichsweise aufwändig und dadurch teuer sind. Bei geschlossenen Boilersystemen dehnt sich nämlich bei der Erhitzung das Medium aus, wodurch der Druck im Boiler stark ansteigen kann und daher der Boiler auf diesen Druckanstieg ausgelegt werden muss. Aus diesem Grund wird auch ein sogenanntes Entspannventil angebracht, das während des Heizvorgangs (ohne Entnahme) öffnet. Im Falle eines Defekts des Entspannventils, muss jedoch zumindest ein Sicherheitsventil vorgesehen werden, das den zu hohen Druck zuverlässig abführt. Dabei unterliegen das Sicherheitsventil, das Entspannventil so wie der gesamte Boiler einer zyklischen Wartung und Prüfung, wobei zusätzlich sämtliche Steckverbindungen einer definierten Druckprüfung unterzogen werden müssen. Alle diese Maßnahmen erzeugen selbstverständlich hohe Kosten. Offene Boilersysteme hingegen kommen ohne die genannten Sicherheitssysteme, wie beispielsweise Entspannventile oder Sicherheitsventile aus, da das Wasser genügend Entspannvolumen zur Atmosphäre hin zur Verfügung hat. Bei offenen Boilersystemen kann daher kein unkontrollierter und gefährlicher Druck entstehen. Der große Nachteil bei einem offenen Boilersystem sind jedoch die enormen Energieverluste während des Stand-by-Betriebs. Da der Boiler nämlich offen ist, gibt das Medium, insbesondere das Wasser, an seiner Oberfläche ständig Energie an die Umgebung ab. Für die Förderung des Mediums, beispielsweise des Wassers, ist die Pumpe nach dem Boiler angebracht und fördert somit erhitztes Medium bzw. Wasser, wodurch höhere Kosten im Bereich der Pumpe entstehen.

Die vorliegende Erfindung beschäftigt sich daher mit dem Problem, für einen Getränkeautomaten, insbesondere im mittleren Preissegment, eine verbesserte Ausführungsform anzugeben, die insbesondere kostengünstig ist und hohen Qualitätsanforderungen hinsichtlich der herzustellenden Getränke gerecht wird.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Getränkeautomaten oder einer Zubereitungsmaschine die Vorteile eines offenen Boilersystems mit den Vorteilen eines geschlossenen Boilersystems zu kombinieren. Generell bedeutet dies, dass der erfindungsgemäße Getränkeautomat bzw. Zubereitungsmaschine einen Boiler aufweist, der über eine ein Ventil aufweisende Leitung mit einem Wassertank, einer Tropfschale, einem Ablauf oder einer Ausgabestelle verbunden ist. Der Boiler selbst ist dabei in einem Hauptstrompfad zwischen einem Leitungsanschluss bzw. einem Wassertank und einer Ausgabestelle angeordnet. Das Ventil ist bei einem sich im Stand-by-Zustand befindlichen Boiler zumindest teilweise geöffnet, wodurch ein druckloses, offenes Boilersystem vorliegt. Darüber hinaus ist eine das Ventil betätigende Steuereinrichtung vorgesehen, die derart ausgebildet ist, dass sie das Ventil schließt, sofern ein Getränkebezug und damit eine Heißwasseranforderung vorliegen. Die Steuereinrichtung überführt somit das im Stand-by-Zustand offene Boilersystem während des Betriebs des Getränkeautomaten in ein geschlossenes Boilersystem. Im Stand-by-Zustand ist dabei die Verbindung mit der Umgebung auf ein Minimum reduziert, so dass kein unerwünscht großer Energieabfluss und damit kein hoher Energieverbrauch vorliegen. Trotzdem ist durch das zumindest teilweise geöffnete Ventil im Stand-by-Zustand stets sichergestellt, dass die höchstmögliche zuführbare Heizenergie und damit der dadurch entstehende Dampf zuverlässig abgeführt werden kann. Das Ventil kann dabei über ein sogenanntes "Normaly Open" (NO) Ventil mit entsprechendem Innendurchmesser realisiert werden. Der erfindungsgemäße Getränkeautomat weist dabei folgende wesentliche Vorteile auf:
- Einsparung von Sicherheitsventilen und druckfesten Ventilen,
- Reduzierung hoher Druckanforderungen an den Boiler, was zu einer Kosteneinsparung beiträgt,
- sofortiger Heißwasserbezug bei einer entsprechender Heißwasseranforderung möglich, da das Medium im Boiler stets auf einer vordefinierten Temperatur gehalten wird,
- die Steuereinrichtung kann durch eine Parallelschaltung des (Entspann-) ventils zur Pumpe ersetzt werden,
- wenig Energieverlust im Stand-by-Zustand, da im Stand-by-Zustand ein im Wesentlichen geschlossenes Boilersystem vorliegt,
- eine hohe Dynamik, da Temperatur- und Druckkonstanz innerhalb von geforderten Toleranzen liegt,
- Möglichkeit der Verwendung einer vergleichsweise kostengünstigen Pumpe, da diese vor dem Boiler angeordnet ist und nicht für die Förderung heißer Medien ausgelegt sein muss.

Bei einer vorteilhaften Weiterbildung der erfindungsgemäßen Lösung, ist das Ventil zusätzlich als druckentlastendes Ventil ausgebildet und öffnet damit aus dem geschlossenen Zustand heraus ab einem vordefinierten Druck. Wird am Getränkeautomaten ein Getränkewunsch und damit eine Heißwasseranforderung eingegeben, so schließt die Steuereinrichtung das am Boiler bzw. in der Leitung befindliche Ventil und betätigt die Pumpe, woraufhin diese den Druck im Boiler erhöht und damit heißes Medium aus diesem zur Ausgabestelle fördert. Steigt dabei der im Boiler herrschende Druck unerwartet schnell und hoch an, so kann das als druckentlastendes Ventil ausgebildete Ventil hier eine Sicherheitsfunktion übernehmen, indem es dann ab einem vordefinierten Druck öffnet und insbesondere gefährlichen Überdruck ablässt. Das erfindungsgemäße Ventil erfüllt dabei sowohl die Funktion eines Entspannventils im Stand-by-Zustand als auch die Funktion eines Sicherheitsventils während des Betriebszustands des Automaten.

Bei einer vorteilhaften Weiterbildung der erfindungsgemäßen Lösung, ist einen den Boiler umgehender Nebenstrompfad vorgesehen, wobei der Nebenstrompfad stromauf des Boilers aus dem Hauptstrompfad abzweigt und wobei im Nebenstrompfad eine Nebenstrompumpe oder ein Ventil oder eine Blende angeordnet ist. Mit dem den Boiler umgehenden Nebenstrompfad ist generell auch eine Kaltmedium-, das heißt eine Kaltwasserförderung möglich, wodurch der Getränkeautomat auch zur Ausgabe von Kaltgetränken geeignet ist. Generell sei dabei an dieser Stelle gesagt, dass in dem Boiler selbstverständlich nicht ausschließlich Wasser erhitzt werden muss, sondern dass dieses System generell auch zur Erhitzung anderer Medien, wie beispielsweise Milch, etc. genutzt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine erste mögliche Ausführungsform eines erfindungsgemäßen Getränkeautomatens,
- Fig. 2: eine Darstellung wie in Fig. 1, jedoch bei einer weiteren Ausführungsform.

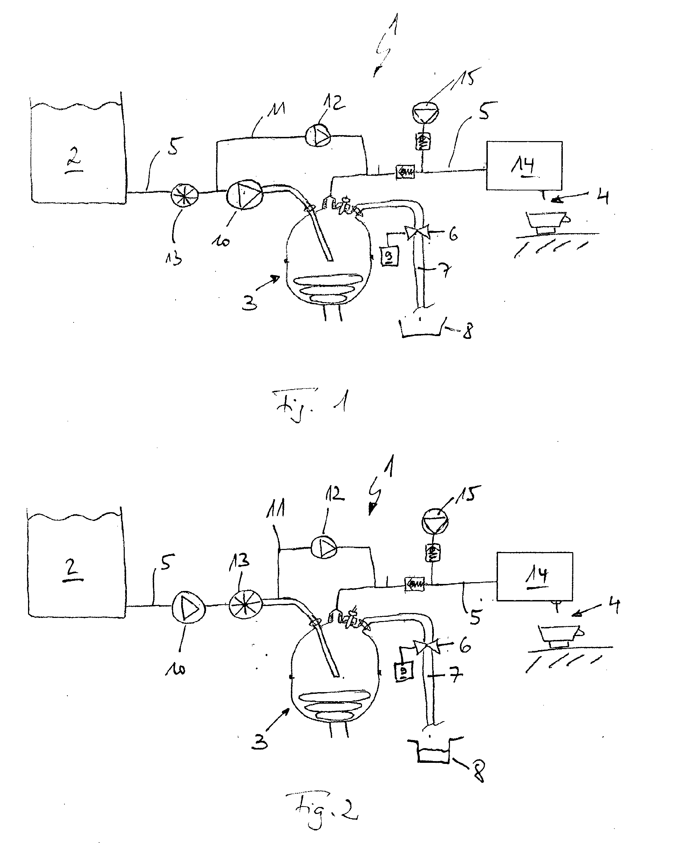

Entsprechend den Fig. 1 und 2, weist ein erfindungsgemäßer Getränkeautomat 1, der beispielsweise als Kaffeevollautomat ausgebildet sein kann, einen von einem Leitungsanschluss oder einem Tank 2 durch einen Boiler 3 zu einer Ausgabestelle 4 führenden Hauptstrompfad 5 auf. Der Boiler 3 ist dabei über eine ein Ventil 6 aufweisende Leitung 7 mit dem Tank 2, einer Tropfschale 8 oder einem Ablauf verbunden. Selbstverständlich kann dabei das Ventil 6 auch direkt am Boiler 3 angeordnet sein. Befindet sich der Boiler 3 in einem Stand-by-Zustand, so ist das Ventil 6 zumindest teilweise geöffnet, vorzugsweise nahezu geschlossen, wodurch einerseits aufgrund des kleinen Öffnungsquerschnitts des Ventils 6 vergleichsweise wenig Energie an die Umgebung nutzlos abgegeben wird und andererseits ein offenes Boilersystem vorliegt. Darüber hinaus ist eine das Ventil 6 betätigende Steuereinrichtung 9 vorgesehen, die derart ausgebildet ist, dass sie das Ventil 6 schließt, sofern ein Getränkebezug und damit eine Heißwasseranforderung vorliegen. Durch das Schließen des Ventils 6 wird somit das vormals offene Boilersystem in ein geschlossenes Boilersystem überführt. Das Ventil 6 ist gemäß einer weiteren bevorzugten Ausführungsform zugleich als druckentlastendes Ventil ausgebildet und öffnet dabei aus dem geschlossenen Zustand heraus ab einem vordefinierten Druck. Aus diesem Grund kann es zu keiner Zeit zu einer unkontrollierten Druckentwicklung innerhalb des Boilers 3 kommen. Des Weiteren kann das Ventil 6 auch im halboffenen Zustand die Öffnung an einen Druckanstieg anpassen.

Betrachtet man die Fig. 1 und 2 weiter, so kann man erkennen, dass im Hauptstrompfad 5 eine Hauptstrompumpe 10 zur Medienförderung durch den Boiler 3 vorgesehen ist, die stromauf des Boilers 3 angeordnet ist und dadurch ausschließlich zur Förderung von kaltem Medium, das heißt zur Förderung von kaltem Wasser ausgebildet sein muss, wodurch die Hauptstrompumpe 10 generell kostengünstiger ausgelegt werden kann, als eine vergleichbare Pumpe, die heißes Wasser fördern muss. Aus diesem Grund besitzt der erfindungsgemäße Getränkeautomat 1 einen deutlichen Kostenvorteil im Vergleich zu bisherigen offenen Boilersystemen.

Ebenfalls erkennbar ist, dass ein den Boiler 3 umgehender Nebenstrompfad 11 vorgesehen ist, wobei der Nebenstrompfad 11 stromauf des Boilers 3 aus dem Hauptstrompfad 5 abzweigt und wobei im Nebenstrompfad 11 einen Nebenstrompumpe 12 angeordnet ist. Anstelle der Nebenstrompumpe 12 kann selbstverständlich auch ein Ventil oder eine Blende vorgesehen sein, wobei auch der Leitungsquerschnitt als Blende genutzt werden kann. Durch die Anordnung der Nebenstrompumpe 12 ist es möglich, ausschließlich kaltes Medium, das heißt kaltes Wasser, vom Wassertank 2 zur Ausgabestelle 4 zu befördern und dadurch auch kalte Getränke herzustellen. Stromab oder stromauf der Hauptstrompumpe 10 kann darüber hinaus im Hauptstrompfad 5 ein Mengenmesser 13, beispielsweise ein Durchflussmesser angeordnet sein, wobei stromab des Boilers 3 zu dem eine Brüheinrichtung 14 vorgesehen sein kann. Der Nebenstrompfad 11 kann dabei, wie gemäß der Fig. 1 gezeigt ist, zwischen dem Mengenmesser 13 und der Hauptstrompumpe 10 aus dem Hauptstrompfad 5 abzweigen oder aber stromab des Mengenmessers 13 und damit zwischen diesem und dem Boiler 3. Eine Rückführung des Nebenstrompfades 11 in den Hauptstrompfad 5 erfolgt selbstverständlich nach dem Boiler 3. Generell kann die Nebenstrompumpe 12 und/oder die Hauptstrompumpe 10 als Flügelzellenpumpe, als Zahnradpumpe, als Schwingankerpumpe oder als ein anderer Pumpentyp ausgebildet sein.

Die Steuereinrichtung 9 kann darüber hinaus derart ausgebildet sein, dass sie die Nebenstrompumpe 12 in Abhängigkeit einer Durchflussmenge, einer Getränketemperatur, einer Wassertemperatur im Tank oder einer Temperatur im Hauptstrompfad 5 stromab oder stromauf des Boilers 3 steuert bzw. regelt. Generell sind dabei die Anordnung der Nebenstrompumpe 12, der Hauptstrompumpe 10 sowie des Mengenmessers 13 variabel, wobei die Fig. 1 und 2 lediglich zwei mögliche Ausführungsformen zeigen.

Um eine definierte Ausgangslage zur Minimierung von Dosierschwankungen zu erhalten, kann der Hauptstrompfad 5 nach dem Boiler 3 zudem mit Luft freigeblasen werden, wofür beispielsweise eine Luftpumpe 15 vorgesehen sein kann.

Bei dem erfindungsgemäßen Getränkeautomaten 1 wurde somit ein offengeschlossenes Boilersystem geschaffen, dass sich im Ruhezustand, das heißt im Stand-by-Zustand im offenen Zustand und bei Bezug von Getränken im geschlossenen Zustand befindet und dadurch die Vorteile sowohl eines offenen Boilersystems als auch eines geschlossenen Boilersystems vereint. Der erfindungsgemäße Getränkeautomat zeichnet sich darüber hinaus durch geringere Kosten, verursacht durch die Einsparung von Sicherheitsventilen und die reduzierten Druckanforderungen an den Boiler 3 aus, ebenso durch einen deutlich reduzierten Energieverbrauch, da keine hohen Energieverluste im Stand-by-Zustand auftreten. Durch die Verwendung einer vergleichsweise kostengünstigen Hauptstrompumpe 10 kann zudem eine Kostenreduzierung erreicht werden. Die Leistung hingegen ist trotz reduzierter Kosten deutlich verbessert als beispielsweise bei herkömmlichen Durchlauferhitzern, da ein sofortiger Bezug bei gleichzeitig geringeren elektrischen Leistungen möglich ist. Das ständig im Boiler 3 aufgeheizte Medium, beispielsweise Wasser dient dabei als Puffer für die Energiebevorratung. Zugleich zeichnet sich der erfindungsgemäße Getränkeautomat 1 auch durch eine hohe Temperatur- und Druckkonstanz in den jeweils geforderten Toleranzbereichen aus.

## Patentansprüche

1. Getränkeautomat (1) oder Zubereitungsmaschine, insbesondere ein Kaffeeautomat, mit einem von einem Leitungsanschluss oder einem Tank (2) durch einen Boiler (3) zu einer Ausgabestelle (4) führenden Hauptstrompfad (5), wobei der Boiler (3) über eine ein Ventil (6) aufweisende Leitung (7) mit dem Tank (2), einer Tropfschale (8), einem Ablauf oder einer Ausgabestelle verbunden ist,
**dadurch gekennzeichnet, dass**
- das Ventil (6) bei einem sich im Stand-by-Zustand befindlichen Boiler (3) zumindest teilweise geöffnet ist, wodurch ein druckloses, offenes Boilersystem vorliegt und wodurch sichergestellt ist, dass ein Höchstmaß an Heizenergie zuführbar ist und der dadurch entstehende Dampf zuverlässig abgeführt werden kann,
- eine das Ventil (6) betätigende Steuereinrichtung (9) vorgesehen ist, die derart ausgebildet ist, dass sie das Ventil (6) schließt, sofern eine Anforderung vorliegt, wodurch ein geschlossenes Boilersystem vorliegt und die das im Stand-by-Zustand offene Boilersystem während des Betriebs des Getränkeautomaten (1) in ein geschlossenes Boilersystem überführt.

2. Getränkeautomat nach Anspruch 1,
**dadurch gekennzeichnet,**
**dass** das Ventil (6) als druckentlastendes Ventil ausgebildet ist und damit aus dem geschlossenen Zustand heraus ab einem vordefinierten Druck öffnet.

3. Getränkeautomat nach Anspruch 1 oder 2,
**dadurch gekennzeichnet,**
**dass** eine Hauptstrompumpe (10) zur Medienförderung durch den Boiler (3) vorgesehen ist, die stromauf des Boilers (3) angeordnet ist.

4. Getränkeautomat nach einem der Ansprüche 1 bis 3,
**dadurch gekennzeichnet,**
**dass** ein den Boiler (3) umgehender Nebenstrompfad (11) vorgesehen ist, wobei der Nebenstrompfad (11) stromauf des Boilers (3) aus dem Hauptstrompfad (5) abzweigt, und wobei im Nebenstrompfad (11) eine Nebenstrompumpe (12) oder ein Ventil (6) oder eine Blende angeordnet ist.

5. Getränkeautomat nach einem der Ansprüche 1 bis 4,
**dadurch gekennzeichnet,**
**dass** im Hauptstrompfad (5) stromab oder stromauf der Hauptstrompumpe (10) ein Mengenmesser (13) angeordnet ist.

6. Getränkeautomat nach Anspruch 4 oder 5,
**dadurch gekennzeichnet,**
- **dass** der Nebenstrompfad (11) zwischen der Hauptstrompumpe (10) und dem Mengenmesser (13) aus dem Hauptstrompfad (5) abzweigt, oder
- **dass** der Nebenstrompfad (11) zwischen dem Mengenmesser (13) und dem Boiler (3) aus dem Hauptstrompfad (5) abzweigt.

7. Getränkeautomat nach einem der Ansprüche 4 bis 6,
**dadurch gekennzeichnet,**
**dass** die Nebenstrompumpe (12) und/oder die Hauptstrompumpe (10) als Flügelzellenpumpe, als Zahnradpumpe oder als Schwingankerpumpe ausgebildet sind/ist.

8. Getränkeautomat nach einem der Ansprüche 4 bis 7,
**dadurch gekennzeichnet,**
**dass** die Steuereinrichtung (9) derart ausgebildet ist, dass sie die Nebenstrompumpe (12) in Abhängigkeit einer Durchflussmenge, einer Getränketemperatur, einer Medientemperatur im Tank (2) oder einer Temperatur im Hauptstrompfad (5) stromauf oder stromab des Boilers (3) steuert/regelt.

## Claims

1. A beverage machine (1) or preparation machine, in particular a coffee machine, comprising a full flow path (5), which leads from a line connection or a tank (2) through a boiler (3) to a dispensing location (4), wherein the boiler (3) is connected to the tank (2), a drip pan (8), a drain or a dispensing location via a line (7), which encompasses a valve (6),
**characterized in that**
- the valve (6) is at least partially open when a boiler (3) is in the stand-by state, whereby a non-pressurized, open boiler system is present and whereby it is ensured that a maximum of heat energy can be supplied and that the steam, which is created through thus, can be discharged reliably,
- provision is made for a control device (9), which operates the valve (6) and which is embodied such that it closes the valve (6), provided that a request is at hand, whereby a closed boiler system is present, and which transfers the boiler system, which is open in the stand-by state, into a closed boiler system during the operation of the beverage machine (1).

2. The beverage machine according to claim 1, **characterized in that** the valve (6) is embodied as pressure-balanced valve and thus opens from the closed state, starting at a predefined pressure.

3. The beverage machine according to claim 1 or 2, **characterized in that** provision is made for a full flow pump (10), which is arranged upstream of the boiler (3), for conveying media through the boiler (3).

4. The beverage machine according to one of claims 1 to 3, **characterized in that** provision is made for a bypass flow path (11), which bypasses the boiler (3), wherein the bypass flow path (11) branches off from the main flow path (5) upstream of the boiler (3), and wherein a bypass flow pump (12) or a valve (6) or a gate is arranged in the bypass flow path (11).

5. The beverage machine according to one of claims 1 to 4, **characterized in that** a fluid flow meter (13) is arranged in the main flow path (5) downstream from or upstream of the main flow pump (10).

6. The beverage machine according to claim 4 or 5, **characterized in**
- **that** the bypass flow path (11) branches off from the main flow path (5) between the main flow pump (10) and the fluid flow meter (13), or
- **that** the bypass flow path (11) branches off from the main flow path (5) between the fluid flow meter (13) and the boiler (3).

7. The beverage machine according to one of claims 4 to 6, **characterized in that** the bypass flow pump (12) and/or the main flow pump (10) are/is embodied as vane-type pump, as gear-type pump or as magnetic piston pump.

8. The beverage machine according to one of claims 4 to 7, **characterized in that** the control device (9) is embodied such that it controls/regulates the bypass flow pump (12) as a function of a flow rate, a beverage temperature, a media temperature in the tank (2) or a temperature in the main flow path (5) upstream of or downstream from the boiler (3).

## Revendications

1. Distributeur de boissons (1) ou appareil de préparation, notamment un distributeur de café avec un trajet de courant principal (5) menant d'un raccord de conduit ou d'un réservoir (2) par l'intermédiaire d'un chauffe-eau (3) vers un point de distribution (4), le chauffe-eau (3) étant relié par l'intermédiaire d'un conduit (7) comportant une soupape (6) avec le réservoir (2), avec un collecteur de gouttes (8), avec un écoulement ou avec un point de distribution,
**caractérisé**
- **en ce que** lorsque le chauffe-eau (3) est en veille, la soupape (6) est au moins partiellement ouverte suite à quoi, le système de chauffe-eau se trouve à l'état ouvert, sans pression et suite à quoi il est assuré qu'un maximum d'énergie de chauffage puisse être amené et que la vapeur qui en résulte puisse être évacuée avec fiabilité,
- **en ce qu'**il est prévu un système de commande (9) actionnant la soupape (6) qui est conçu sorte qu'il ferme la soupape (6) en présence d'une demande, pour donner lieu à un système de chauffe-eau fermé et qui transfère le système de chauffe-eau ouvert à l'état de veille en un système de chauffe-eau fermé pendant le fonctionnement du distributeur de boissons (1).

2. Distributeur de boissons selon la revendication 1, **caractérisé en ce que** la soupape (6) est conçue en tant que soupape de décompression et s'ouvre de ce fait à partir de l'état fermé à l'atteinte d'une pression prédéfinie.

3. Distributeur de boissons selon la revendication 1 ou la revendication 2, **caractérisé en ce qu'**il est prévu une pompe pour courant principal (10) qui est placée en amont du chauffe-eau (3), pour transporter les fluides à travers le chauffe-eau (3).

4. Distributeur de boissons selon l'une quelconque des revendications 1 à 3, **caractérisé en ce qu'**il est prévu un trajet de courant secondaire (11) contournant le chauffe-eau (3), le trajet de courant secondaire (11) dérivant en amont du chauffe-eau (3) hors du trajet de courant principal (5) et dans le trajet de courant secondaire (11) étant placée une pompe pour courant secondaire (12) ou une soupape (6) ou un écran.

5. Distributeur de boissons selon l'une quelconque des revendications 1 à 4, **caractérisé en ce que** dans le trajet de courant principal (5), un indicateur de débit (13) est placé en aval ou en amont de la pompe pour le courant principal (10).

6. Distributeur de boissons selon la revendication 4 ou la revendication 5,
**caractérisé**
- **en ce qu'**entre la pompe pour le courant principal (10) et l'indicateur de débit (13), le trajet de courant secondaire (11) dérive du trajet de courant principal (5) ou
- **en ce qu'**entre l'indicateur de débit (13) et le chauffe-eau (3), le trajet de courant secondaire (11) dérive du trajet de courant principal (5).

7. Distributeur de boissons selon l'une quelconque des revendications 4 à 6, **caractérisé en ce que** la pompe pour courant secondaire (12) et/ou la pompe pour courant principal (10) est/sont conçue(s) en tant que pompe à cellules semi-rotatives, en tant que pompe à engrenages ou en tant que pompe à piston oscillant.

8. Distributeur de boissons selon l'une quelconque des revendications 4 à 7, **caractérisé en ce que** le système de commande (9) est conçu de sorte à commander / à régler la pompe de courant secondaire (12) en fonction d'un débit, d'une température de boisson, d'une température de fluide dans le réservoir (2) ou d'une température dans le trajet de courant principal (5), en amont ou en aval du chauffe-eau (3).
